# EUROPEAN PATENT SPECIFICATION

(11) **EP 3 993 175 B1**
(45) Date of publication and mention of the grant of the patent: **11.11.2026**
(21) Application number: 21204718.7
(22) Date of filing: 26.10.2021
(51) Int. Cl.: H01R 13/52, B29C 45/00, H01R 13/504

(54) **SEALED CONNECTOR HOUSING FOR AN ANGLED ELECTRICAL CONNECTOR**
ABGEDICHTETES VERBINDERGEHÄUSE FÜR EINEN ABGEWINKELTEN ELEKTRISCHEN VERBINDER
BOÎTIER DE CONNECTEUR ÉTANCHE POUR UN CONNECTEUR ÉLECTRIQUE EN BIAIS

(30) Priority: 28.10.2020 IN 202041046946
(43) Date of publication of application: 04.05.2022
(73) Proprietor: TE Connectivity Solutions GmbH, 8200 Schaffhausen (CH)
(72) Inventor: KT, Gopi, Bangalore (IN); RAO C H, Amrutha, Bangalore (IN); B, Amith Manjunath, Bangalore (IN)
(74) Representative: Grünecker Patent- und Rechtsanwälte PartG mbB

(56) References cited:
- EP-A1- 1 883 135
- WO-A1-2019/219118
- DE-A1- 102013 007 069
- DE-U1- 202008 008 809
- DE-U1- 202015 102 170
- US-A- 3 998 515

## Description

The invention relates to a connector housing for an angled electrical connector and to an angled electrical connector.

Angled electrical connectors, also in sealed variants, are known in the art. An angled electrical connector allows an electrical connection to be established along a mating direction, which is different from a cable direction, along which an electric cable of the connector extends. Connector housings for such angled electrical connectors are often composed of at least two housing members. In order to provide a sealed connector housing, the at least two housing members must be mounted to one another in a sealed manner. For this, a seal is used. Due to the angled arrangement between an electrical contact and the cable that is to be housed in the connector housing, assembling such a connector housing may be cumbersome. Moreover, the seal may become damaged during assembly of the connector housing.

EP 1 883 135 A1 discloses a high-current angled electrical connector for an electrical cable, for transmitting high electrical output to or from a receptacle for the electrical connector, comprising a divided housing having a housing body and a housing cover which is attachable to the housing body, wherein a plug-in area of the housing body, which may be connected with the connector receptacle, is angled with respect to a cable area of the housing cover, at which the cable is securable.

DE 20 2008 008 809 U1 relates to a housing for a round connector.

DE 10 2013 007 069 A1 discloses a connector support for the assembly at a machine housing.

DE 20 2015 102 170 U1 discloses an angled connector with a support ring and a latching ring of a counter bearing for a spring element.

WO 2019/219118 A1 discloses an angled electrical connector for attachment to an assembly housing. The annular sealing element is embodied as a moulded seal having an axial press portion and a radial press portion so as to bring about a sealing effect between a fastening flange and the assembly housing and the end-face limb portion of the connection limb.

It is therefore the object of the invention to provide an improved connector housing for an angled electrical connector that is easy to assemble and that reduces the risk of damaging the seal during assembling.

This object is solved by the subject matter of claim 1.

Preferred embodiments are defined by the dependent claims.

This object is achieved by a connector housing comprising a contact housing member for receiving at least one electrical contact and being configured to be mated with a mating connector along a mating direction, and a cable housing member configured to receive at least one electric cable along a cable direction, the cable direction being inclined with respect to the mating direction, wherein the contact housing member and the cable housing member are configured to be mounted to one another along an assembly direction to form the connector housing, wherein the connector housing further comprises at least one ring seal configured to seal a gap between the contact housing member and the cable housing member, the ring seal having two first portions and two second portions, wherein the two first portions are spaced apart from each other in the mating direction and in the assembly direction, and have first sealing surfaces extending perpendicular to the mating direction, wherein each of the two second portions interconnects the two first portions and wherein the two second portions are inclined with respect to the mating direction and to the cable direction.

Due to the inclined arrangement of the second portions of the ring seal, in particular in contrast to an arrangement in which such second portions extend parallel to the cable direction or to the assembly direction, the housing members and the ring seal may pass along each other during assembly only along a short distance.

Due to the perpendicular arrangement of the first sealing surfaces of the first portions relative to the mating direction, a uniform pressure on the seal along the mating direction may be achieved. A force may be exerted on a connector housing according to the invention, when such a connector housing is mated with a mating connector. This force may lead to a pressure on the first portions of the ring seal. Due to the aforementioned arrangement, such pressure is distributed evenly on the first portions. Hence, an effective sealing between the two housing members may be achieved.

In the following, further improvements of the invention are described. The additional improvements may be combined independently of each other, depending on whether a particular advantage of a particular improvement is needed in a specified application.

According to a first advantageous improvement, each second portion basically extends along a longitudinal direction between the two first portions, the longitudinal direction extending within an angle between the mating direction and the assembly direction.

The two second portions are preferably inclined with respect to the assembly direction and to the cable direction. The assembly direction and the cable are preferably parallel to each other. The connector housing, according to the invention, is preferably a connector housing for a 90 ° angled electrical connector. Hence, the mating direction is preferably perpendicular to the cable direction and, also preferably to the assembly direction.

The first sealing surfaces preferably extend parallel to the assembly direction. Hence, during assembly of the two housing members, at least one of the housing members may slide along the first sealing surfaces during its movement along the assembly direction. The first sealing surfaces extending parallel to the assembly direction may also be described as surface normal vectors of the first sealing surfaces being perpendicular to the assembly direction. The surface normal vectors of the two first sealing surfaces are preferably antiparallel with each other. This may, for example, be the case when the ring seal extends around an inner volume of the connector housing. The surface normal vectors of all sealing surfaces preferably point towards said inner volume of the connector housing.

In an inner volume of the connector housing, at least one electrical contact and at least one electrical cable, which is electrically contacted to the electrical contact, may be housed to form an electrical connector.

The second portions preferably have second sealing surfaces, which extend perpendicular to the first sealing surfaces of the first portions. In other words, surface normal vectors of the second sealing surfaces preferably extend perpendicular to the surface normal vectors of the first sealing surfaces. The surface normal vectors of the two second sealing surfaces preferably extend antiparallel with each other. In other words, the two sealing surfaces are arranged facing each other across an inner volume of the connector housing.

According to another advantageous improvement of the connector housing according to the invention, at least one of the first and second portions of the ring seal has an overall, in particular oblong, rectangular cross section, one of the flat sides of the cross section being part of a sealing surface, in particular part of at least one of the following: the two first sealing surfaces and the two second sealing surfaces. The ring seal may in particular have the overall shape of a band, said band having the rectangular cross section.

In order to allow for a facilitated mating of the two housing members and the ring seal, the at least one ring seal may have, in a projection along the assembly direction, an overall rectangular shape, the two first portions forming two parallel sides of the rectangular shape and the two second portions forming two parallel sides of the rectangular shape which are perpendicular to the sides formed by the first portions. Said rectangular shape may encircle an inner volume of the connector housing in an assembled stated.

According to another advantageous improvement of the connector housing according to the invention, a contour of the ring seal has, in a projection along a direction perpendicular to the assembly direction and to the mating direction, a first straight section, a diagonal section, which corresponds to the second portions and which is inclined with respect to the first straight section, and a second straight section that is parallel to the first straight section, the straight sections connecting the first portions with the second portions of the ring seal. The straight sections may, in particular, extend perpendicular to the assembly direction and the first and the second straight section are preferably offset with respect to each other along the assembly direction.

A particular advantageous arrangement of the ring seal may be achieved when the second portions of the ring seal basically extend straight, in particular, parallel to a plane which is parallel to the assembly direction and to the mating direction, and are inclined at an angle between 20° and 70° with respect to a plane, which is parallel to the assembly direction and perpendicular to a plane that is parallel to the mating direction and to the assembly direction. The angle is preferably between 25° and 45°.

At least one of the second portions of the ring seal preferably provides a passage length for one of the housing members to pass during assembly, in particular to reach an assembled state of the connector housing, the passage length being smaller than 3 x, preferably smaller than 2.5 x, a width of the ring seal in the second portion. The width is measured along a direction perpendicular to the basically straight second portion and parallel to a plane that is parallel to the mating direction as well as the assembly direction. Due to this arrangement, at least one of the housing members and the seal may pass along each other along a short distance in order to prevent damage to the seal.

In order to achieve an effective sealing between the two housing members, at least one of the housing members, preferably the contact housing member, is plugged through the at least one ring seal, at least in parts in an assembled state of the connector housing. Thereby, the at least one ring seal may extend circumferentially along the housing member that is plugged through the other housing member, thereby providing an effective sealing between the two housing members.

The contact housing member and the cable housing member preferably each have a circumferential wall, wherein the at least one ring seal is arranged in an undetachable manner on the circumferential wall of one of the housing members and abuts the circumferential wall of the other housing member in an assembled state of the connector housing.

Preferably, the circumferential wall of the contact housing is plugged through the ring seal in the assembled state of the connector housing.

In the assembled state, the circumferential walls of the two housing members preferably overlap each other. The at least one ring seal preferably extends between the two overlapping circumferential walls.

In order to achieve an arrangement in which the at least one ring seal is fixated in an undetachable manner on one of the housing members, the at least one ring seal is preferably fixated to a circumferential wall of one of the housing members by at least one of the following means: an adhesive bond being molded onto the circumferential wall, the corresponding housing member being manufactured by two component molding together with the ring seal. Preferably, the at least one ring seal is formed in a two-component molding process together with the corresponding housing member.

According to a preferred embodiment, the at least one ring seal is preferably arranged in an undetachable manner on an inner surface of the circumferential wall of the cable housing member. The contact housing member may then be inserted into the cable housing member, at least in parts such that the ring seal circumferentially extends around the contact housing member and is in sealingly contact to the same. In an alternative embodiment, the arrangement may also work *vice versa.* For example, the ring seal may be arranged on an inner surface of a circumferential wall of the contact housing member, or the at least one ring seal may be arranged on an outer surface of a circumferential wall of one of the housing members that is then to be inserted into the other housing member to form the sealed arrangement.

At least one of the housing members may comprise at least one groove for receiving at least one of the first portions of the at least one ring seal and at least a part of the other housing member in an assembled state of the connector housing, a longitudinal direction of the groove extending perpendicular to the assembly direction. The at least one groove may prevent a movement of the housing members relative to each other along the mating direction, in particular when the electrical connector with the connector housing, according to the invention, is used. Such an arrangement may also assist in keeping pressure on the seal in order to keep a sealed connection between the housing members intact.

Preferably, the at least one groove extends circumferentially such that not only the first portions, but the whole ring seal may protrude into the groove. Preferably, the ring seal together with at least a part of a circumferential wall of one of the housing members extends into the circumferential groove in an assembled state of the connector housing. In order to allow an easy insertion into the groove, said groove preferably opens towards the other housing along the assembly direction. The at least one groove is preferably arranged on the contact housing member. However, this is not mandatory.

The at least one groove preferably extends circumferentially around an inner volume of the housing member, in particular the contact housing member. The groove may have a U-shaped profile, wherein a circumferential wall of the housing member with the groove forms one leg of the U-shaped profile.

In order to safely guide the two housing members with respect to each other along the assembly direction, and in order to prevent damage to the seal, the housing members are preferably provided with complementary guiding features configured to guide the housing members relative to each other along the assembly direction. Said complementary guiding features may also serve to prevent a movement in a direction perpendicular to the assembly direction. The guiding features may be formed as at least one longitudinal rib on one housing member and at least one complementary shaped longitudinal groove on the other housing member.

In order to lock the cable housing member with the contact housing member in the assembled state, the cable housing member may be provided with at least one elastically deflectable latching member which is provided with at least one latching hook. The at least one latching hook can be configured to enter an opening in the contact housing member in order to engage the outer wall of the same. Thereby, the cable housing member can be locked with the contact housing member.

In order to prevent a movement of the housing members relative to each other along the mating direction in the assembled state, at least one of the housing members, in particular the cable housing member, may be provided with at least one projection projecting along the assembly direction and the other housing member, in particular the contact housing member, may be provided with at least one hole for receiving the at least one projection in the assembled state, wherein the at least one projection and the at least one hole are configured for preventing a movement of the housing members relative to each other parallel to the mating direction in the assembled state.

In the following, the invention and its improvements are described in greater detail using exemplary embodiments and with reference to the drawings. As described above, the various features shown in the embodiments may be used independently of each other in specific applications.

In the following figures, elements having the same function and/or the same structure will be referenced by the same reference signs.

In the drawings:
- Fig. 1: shows a first embodiment of a connector housing according to the invention in an exploded view;
- Fig. 2: shows a cut view of the connector housing of Fig. 1 in an assembled state;
- Fig. 3: shows a contact housing member of the connector housing of Fig. 1 in a perspective view;
- Fig. 4: shows a cable housing member of the connector housing of Fig. 1 in a perspective view
- Figs. 5-7: show the ring seal of the connector housing of Fig. 1 in a different views;
- Fig. 8: shows a second embodiment of a connector housing according to the invention in an exploded view; and
- Fig. 9: show a cut view of the second embodiment of the connector housing of Fig. 8 in an assembled state.

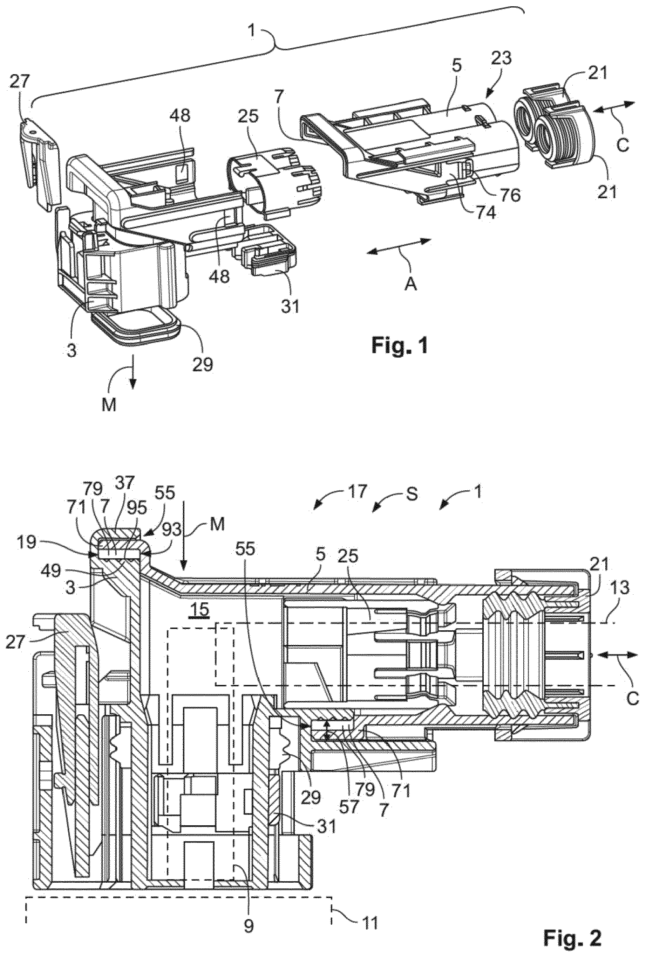

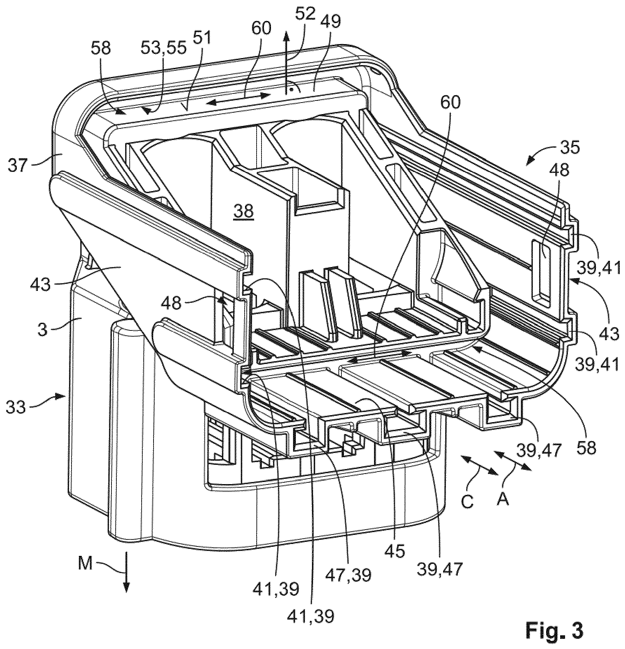

In the following, a first advantageous embodiment of a connector housing 1 according to the invention is described with respect to Figs. 1 and 2. Reference is also made to Figs. 3 to 7, in which certain elements of the connector housing 1 are shown in greater detail.

The connector housing 1 according to the invention comprises a contact housing member 3, a cable housing member 5 and a ring seal 7.

The contact housing member 3 is configured to receive at least one electrical contact 9 (indicated by a dashed rectangle in Fig. 2). to be mated with a mating connector 11 (indicated by a dashed line in Fig. 2) along a mating direction M.

The cable housing member 5 is configured to receive at least one electric cable 13 (indicated by the dashed lines in Fig. 2) along a cable direction C.

In an assembled state S of the connector housing 1, the at least one electric cable 13 may be electrically connected to the at least one electric contact 9. Both, the at least one electric contact 9 and the at least one electric cable 13 are arranged in a common inner volume 15 of the connector housing 1 at least in parts.

The connector housing 1, the at least one electric contact 9 and the at least one electric cable 13 may together form an angled electric connector 17 according to the invention.

The cable direction C is inclined with respect to the mating direction M. Preferably, the cable direction C and the mating direction M are perpendicular to each other. Then, the connector housing 1 according to the invention may be used for a 90° angled connector. Preferably, the angled electric connector 17 according to the invention is such a 90° angled connector.

The contact housing member 3 and the cable housing member 5 are configured to be mounted to one another along an assembly direction A in order to form the connector housing 1. Preferably, the assembly direction A is parallel with the cable direction C.

When the housing members 3 and 5 are mounted to one another, a gap 19 may be formed between the two housing members. In order to seal the gap 19 and thereby to provide a sealed common inner volume 15, the connector housing 1 comprises the ring seal 7 that is configured to seal the gap 19.

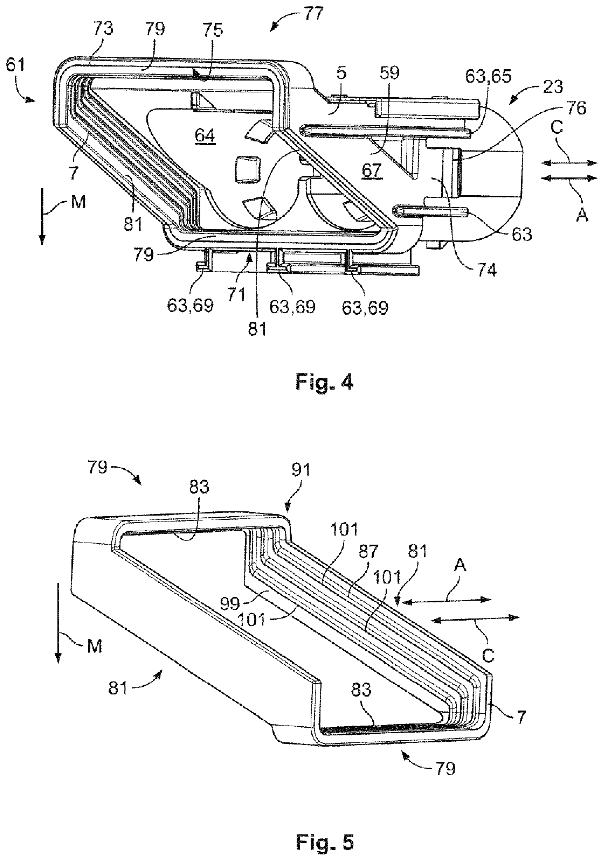

The ring seal 7 will be described later on in detail with respect to Figs. 4 to 7.

The connector housing 1 may also comprise further elements, in particular elements for improving the sealing of the inner volume 15 and also in order to form a sealed connection with a mating connector 11.

For example, the connector housing 1 may comprise one or more sealing caps 21 with which a rear side 23 of the cable housing member 5 may be sealingly closed. The at least one electric cable 13 may extend through at least one of the sealing caps 21, such that the cable 13 can be guided out of the cable housing member 5 in a sealing manner.

The connector housing 1 may also comprise at least one cable fixation member 25, through which the at least one electric cable 13 may extend and which may be compressed by the cable housing member 5. The compression of the cable fixation member 25 may result in a tight grip of the cable fixation member 25 on the at least one electric cable 13 such that the cable 13 is safely fixated inside the connector housing 1.

The connector housing 1 may comprise a connector position assurance device 27, with which a connection between the connector housing 1 and the mating connector 11 may secured.

The connector housing 1 may further comprise a connection seal 29 configured to provide a sealed connection between the connector housing 1 and the mating connector 11.

In order to secure the position of an electric contact 9 in the contact housing member 3, the connector housing 1 may also comprise a retainer 31 that can be inserted in the contact housing member 3 to extend around the electric contact 9 in order to secure its position.

In the following, the contact housing member 3 of the connector housing 1 is briefly described with respect to Fig. 3. Reference is also made to Figs. 1 and 2.

The contact housing member 3 forms a part of the connector housing 1 and may house a part of the common inner volume 15. The connector housing 3 comprises a contact compartment 33 in which the at least one electric contact 9 may be received. The contact compartment 33 basically extend along the mating direction M. Perpendicular to the contact compartment 33 and, hence, in the assembly direction A, extends a mounting section 35 that is configured to be mounted together with the cable housing member 5.

The contact housing member 3 has an outer wall 37 which is opened along the assembly direction A to allow the contact housing member 3 to be mounted to the cable housing member 5. The outer wall 37 may define the mounting section 35. In the assembled state S, at least a part of the cable housing member 5 may be surrounded by the outer wall 37. The outer wall 37 may at least partially surround an inner volume 38 of the contact housing member 3 which is part of the common inner volume 15 of the connector housing 1 in the assembled state S.

The outer wall 37 is provided with grooves 39 which extend parallel to the assembly direction A and which are opened in the assembly direction A for receiving complementary means on the cable housing member 5.

Lateral grooves 41 are present in lateral sections 43 of the outer wall 37. The lateral sections 43 extend parallel to the assembly direction A and the mating direction M. In a bottom section 45 of the outer wall 37, bottom grooves 47 are arranged, which have undercut cross sections. In these undercut grooves 47, complementary means of the cable housing member 5 can be received.

Due to the undercut cross sections of the bottom grooves 47 and the complementary shaped means of the cable housing member 5, the bottom grooves 47 allow a relative movement between the contact housing member 3 and the cable housing member 5 along the assembly direction A. However, any movement in a direction perpendicular to the assembly direction A is prevented. Hence, the grooves 39 do not only facilitate the assembly of the connector housing 1, but also improve the stability of the connector housing 1 when the connector housing 1 is in the assembled state S.

The lateral sections 43 of the outer wall 37 are provided with openings 48 for receiving latching members of the cable housing member 5 in the assembled state S. The openings 48 are preferably formed as through holes.

The contact housing member 3 is further provided with a circumferential wall 49 which extends at least in parts around the inner volume 38. An outer surface 51 of the circumferential wall 49 extends parallel with the assembly direction A. In other words, a surface normal vector 52 on the outer surface 51 extends perpendicular to the assembly direction A. The ring seal 7 may be arranged on the outer surface 51 of the circumferential wall 49 in the assembled state S.

The circumferential wall 49 and the outer wall 37 open up a volume 53 between them that has the overall shape of a circumferential groove 55. The groove 55 has a U-shaped cross section, wherein the circumferential wall 49 and the outer wall 37 form the legs of the U-shaped profile.

In the assembled state S of the connector housing 1, the ring seal 7 and at least a part of the cable housing member 5 are inserted in the groove 55. Preferably, an internal width 57 of the groove 55 is chosen to compress the ring seal 7 when the latter is inserted in the groove 55 together with a part of the cable housing member 5. Hence, a tight sealing between the housing members 3 and 5 may be achieved. The internal width 57 may be measured parallel to the surface normal vector 52 between the circumferential wall 49 and the outer wall 37. The groove 55 preferably has two sections 58 which extend along longitudinal directions 60 which are perpendicular to the assembly direction A.

In the following, the cable housing member 5 and the ring seal 7 are described with respect to Figs. 4 to 7.

The cable housing member 5 basically extends longitudinally along the cable direction C in order to house an inserted electric the cable 13 at least in parts. The cable housing member 5 comprises an outer wall 59 which is opened at the rear side 23 to allow a cable 13 to pass through the housing member 5 and at a front side 61 at which the cable housing member 5 can be mounted to the contact housing member 3 to form the connector housing 1.

The cable housing member 5 has longitudinal ribs 63 which extend parallel with the assembly direction A and which are preferably formed monolithically with the outer wall 59, projecting to an outside of the cable housing member 5. The outer wall 59 partially encloses an inner volume 64 of the cable housing member 5.

The inner volume 64 of the cable housing member 5 and the inner volume 38 of the contact housing member 3 together form the common inner volume 15 of the connector housing 1 in the assembled state S.

The longitudinal ribs 63 are shaped complementary to the grooves 39 of the contact housing member 3. Hence, the cable housing member 5 is provided with lateral ribs 65 which are arranged on the lateral sections 67 of the outer wall 59 and with bottom ribs 69, which are arranged on a bottom section 71 of the outer wall 59. The bottom ribs 69 either have a T-shaped or L-shaped profile, each of the bottom ribs 69 being shaped so as to be inserted into a complementary shaped groove 47 of the contact housing member 3. The ribs 63 and the grooves 39 form complementary guiding features of the connector housing 1.

At the front side 61, the outer wall 59 forms the circumferential wall 73 of the cable housing member 5. The circumferential wall 73 is inserted into the circumferential groove 55 of the contact housing member 3 in the assembled state S of the connector housing 1.

In order to lock the cable housing member 5 with the contact housing member 3 in the assembled state S, the cable housing member 5 is provided with two elastically deflectable latching members 74 which are provided with latching hooks 76. The latching hooks 76 can enter the openings 48 in the contact housing member 3 to engage the outer wall 37. Thereby, the cable housing member 5 can be locked with the contact housing member 3.

The circumferential wall 73 has an inner surface 75 on which the ring seal 7 is fixated in an undetachable manner. Preferably, the ring seal 7 is formed by molding the same on the inner surface 75. More preferably, the cable housing member 5 and the ring seal 7 together are formed as a two-component molded (2K-molded) work piece 77.

The ring seal 7 has two first portions 79 and two second portions 81. The two first portions 79 are spaced apart from each other in the mating direction M and in the assembly direction A. The two first portions 79 have first sealing surfaces 83 which extend perpendicular to the mating direction M. In other words, surface normal vectors 85 of the first sealing surfaces 83 are parallel to the mating direction M. Furthermore, the two surface normal vectors 85 of the first sealing surfaces 83 point toward each other.

Due to this arrangement, the circumferential wall 49 of the contact housing member 3 may slide along the sealing surfaces 83 without damaging the seal 7 during assembly of the connector housing 1. Furthermore, due to the parallel arrangement of the two sealing surfaces 83 and the arrangement perpendicular to the mating direction M, a uniform pressure in the mating direction M may be achieved when the connector housing 1 is mated with a mating connector 11.

The two second portions 81 interconnect the two first portions 79 such that the seal 7 has an overall shape of a ring.

The two second portions 81 are inclined with respect to the mating direction M and to the cable direction C. In the preferred case of a 90° angled connector housing, where the cable direction C is parallel to the assembly direction A, the two second portions 81 are inclined with respect to the mating direction M and to the assembly direction A.

The second portions 81 have second sealing surfaces 87 which extend perpendicular to the first sealing surfaces 83 of the first portions 79. Surface normal vectors 89 on the second sealing surfaces 87 extend perpendicular to the surface normal vectors 85 on the first sealing surfaces 83. The surface normal vectors 89 on the second sealing surfaces 87 point towards each other.

The ring seal 7 preferably has the overall shape of a band 91, wherein the ring seal 7 preferably has an overall rectangular cross section 93 which is preferably oblong. One flat side 95 of the rectangular cross section 93 is part of or forms one of the sealing surfaces 83 or 87.

Preferably, the ring seal 7 has, along its whole circumferential direction 97, a cross section 93 in the shape of an oblong rectangle. However, the first and second portions 79 and 81 of the ring seal may have different cross section.

The sealing surfaces 83 and 87 are preferably part of a circumferentially continuous sealing surface 99 of the ring seal 7. The sealing surface 99 is preferably provided with circumferentially continuous sealing ribs 101 in order to improve the sealing of the ring seal 7.

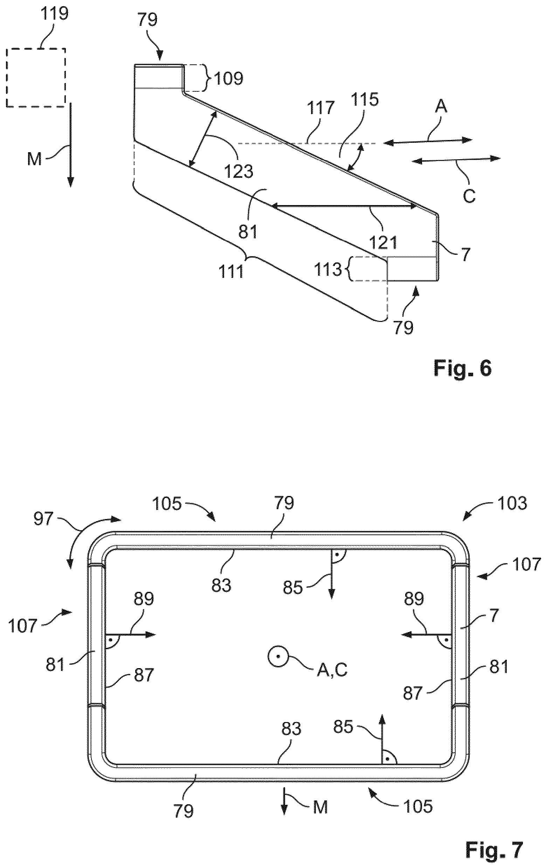

In a projection along the assembly direction A, which is shown in Fig. 7, the ring seal 7 has an overall rectangular shape 103 wherein the two first portions 79 form two parallel sides 105 and the two second portions 81 form two parallel sides 107 which are perpendicular to the parallel sides 105 of the first portions 79.

In the assembled state S, the ring seal 7 preferably surrounds the common inner volume 15 of the connector housing 1.

Reference is now made to Fig. 6, which shows a projection perpendicular to the assembly direction A and perpendicular to the mating direction M. In this projection, the ring seal has a first straight section 109, a diagonal section 111 which corresponds to the second portions 81, and a second straight section 113 that is parallel to the first straight section 109. The straight sections 109 and 113 connect the first portions 79 with the second portions 81 of the ring seal 7.

The diagonal section 111, or, in other words, the second portions 81, extend basically straight and are inclined at an angle 115 with respect to a plane 117 that is parallel to the assembly direction A and perpendicular to a plane 119 that is parallel to the mating direction and to the assembly direction A. The angle 115 is preferably between 20° and 70°, more preferably between 25° and 45°. The plane 119 corresponds to the paper plane of Fig. 7.

At least one of the second portions 81, preferably both second portions 81, provide a passage length 121 for one of the housing members 3 or 5 to pass during assembly.

In the preferred embodiment, where the ring seal 7 is fixated on the cable housing member, 5 the contact housing member 3 passes along the ring seal 7 during assembly. The passage length 121 is preferably smaller than 3 times the width 123 of the ring seal 7 in the second portion 81, more preferably smaller than 2.5 times.

The width 123 is measured along a direction perpendicular to the second portion 81 and parallel to the plane 119. Due to this short passage length 121 in comparison to a seal that extends only along the assembly direction A, damage to the seal 7 during assembly of the connector housing 1 may be prevented.

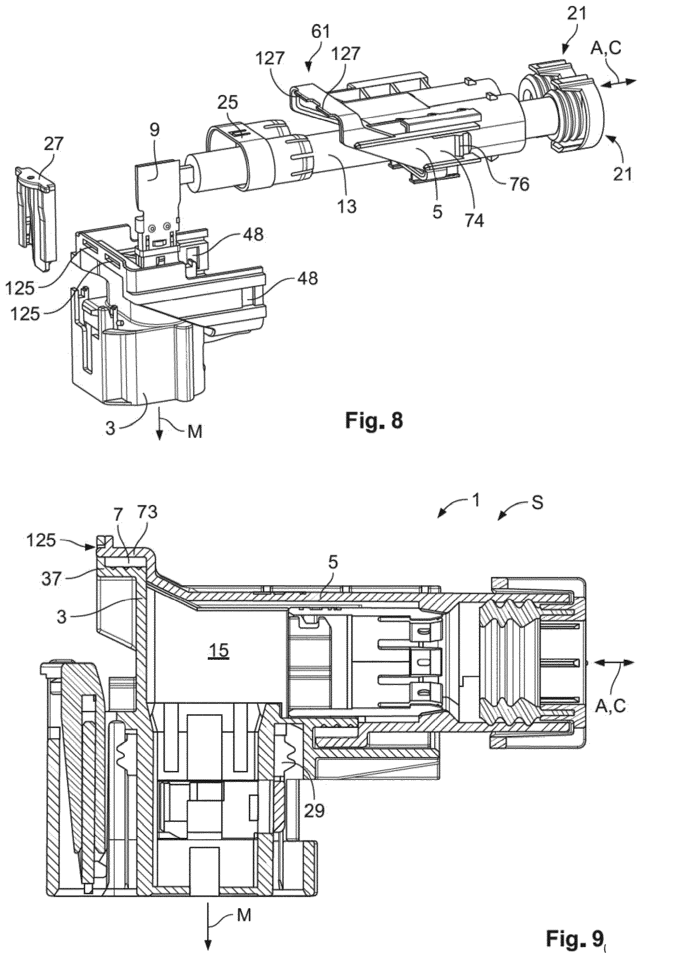

In the following, a second embodiment of the connector housing 1 according to the invention is briefly described with respect to Figs. 8 and 9. For the sake of brevity, only the differences to the aforementioned first embodiment are described in detail.

The second embodiment basically differs from the first embodiment in that there is no circumferentially extending groove 55 for receiving the circumferential wall 73 of the cable housing member 5.

Instead, the outer wall 37 of the contact housing member 3 is provided with longitudinally extending holes 125 into which projections 127 which are arranged on the front side 61 of the cable housing member 5 can be inserted. The holes 125 longitudinally extend perpendicular to the mating direction M and to the assembly direction A.

In the assembled state S of the connector housing 1, the projections 127 which are arranged inside the holes 125 prevent a movement of the cable housing member 5 with respect to the contact housing member 3 in a direction parallel to the mating direction M.

At the same time, this arrangement may ensure that the ring seal 7 is compressed between the circumferential wall 73 of the cable housing member 5 and the circumferential wall 49 of the contact housing member 3 to improve the sealing between the housing members 3 and 5.

### REFERENCE NUMERALS

- 1: connector housing
- 3: contact housing member
- 5: cable housing member
- 7: ring seal
- 9: electric contact
- 11: mating connector
- 13: electric cable
- 15: common inner volume
- 17: angled electric connector
- 19: gap
- 21: sealing cap
- 23: rear side
- 25: cable fixation member
- 27: connector positioning assurance device
- 29: connection seal
- 31: retainer
- 33: contact compartment
- 35: mounting section
- 37: outer wall
- 38: inner volume
- 39: grooves
- 41: lateral grooves
- 43: lateral sections
- 45: bottom section
- 47: bottom groves
- 48: openings
- 49: circumferential wall
- 51: outer surface
- 52: surface normal vector
- 53: volume
- 55: circumferential groove
- 57: internal width
- 58: section
- 59: outer wall
- 60: longitudinal direction
- 61: front side
- 63: longitudinal ribs
- 64: inner volume
- 65: lateral ribs
- 67: lateral sections
- 69: bottom ribs
- 71: bottom section
- 73: circumferential wall
- 74: latching members
- 75: inner surface
- 76: latching hooks
- 77: two component molded work piece
- 79: first portions
- 81: second portions
- 83: first sealing surfaces
- 85: surface normal vector
- 87: second sealing surfaces
- 89: surface normal vector
- 91: band
- 93: rectangular cross section
- 95: flat side
- 97: circumferential direction
- 99: continuous sealing surface
- 101: sealing rib
- 103: rectangular shape
- 105: sides
- 107: sides
- 109: first straight section
- 111: diagonal section
- 113: second section
- 115: angle
- 117: plane
- 119: plane
- 121: passage length
- 123: width of the seal
- 125: hole
- 127: projection
- A: assembly direction
- C: cable direction
- M: mating direction
- S: assembled state

## Claims

1. Connector housing (1) for an angled connector (17), the connector housing (1) comprising a contact housing member (3) for receiving at least one electrical contact (9) and being configured to be mated with a mating connector (11) along a mating direction (M), and a cable housing member (5) configured to receive at least one electric cable (13) along a cable direction (C), the cable direction (C) being inclined with respect to the mating direction (M), wherein the contact housing member (3) and the cable housing member (5) are configured to be mounted to one another along an assembly direction (A) to form the connector housing (1), wherein the connector housing (1) further comprises at least one ring seal (7) configured to seal a gap (19) between the contact housing member (3) and the cable housing member (5), the ring seal (7) extending around an inner volume (15) of the connector housing (1) and having two first portions (79) and two second portions (81), wherein the two first portions (79) are spaced apart from each other in the mating direction (M) and in the assembly direction (A) and have first sealing surfaces (83) extending perpendicular to the mating direction (M), wherein each of the two second portions (81) interconnects the two first portions (79), wherein the two second portions (81) have second sealing surfaces (87) and are inclined with respect to the mating direction (M) and to the cable direction (C),
**characterized in that**
the second sealing surfaces (87) of the ring seal (7) are arranged facing each other across the inner volume (15) and form part of a circumferentially continuous sealing surface (99) of the ring seal (7), wherein the circumferentially continuous sealing surface (99) is provided with circumferentially continuous sealing ribs (101),
wherein a contour of the ring seal (7) has, in a projection along a direction perpendicular to the assembly direction (A) and to the mating direction (M), a first straight section (109), a diagonal section (111) which corresponds to the second portions (81) and which is inclined with respect to the first straight section (109), and a second straight section (113) that is parallel with the first straight section (109), the straight sections (109, 113) connecting the first portions (79) with the second portions (81) of the ring seal (7).

2. Connector housing (1) according to claim 1, wherein the first sealing surfaces (83) extend parallel to the assembly direction (A).

3. Connector housing (1) according to claim 1 or 2, wherein the second portions (81) have second sealing surfaces (87) which extend perpendicular to the first sealing surfaces (83) of the first portions (79).

4. Connector housing (1) according to any of claims 1 to 3, wherein at least one of the first and second portions (79, 81) of the ring seal (7) has an overall rectangular cross section (93), one of the flat sides (95) of the cross section (93) being part of a sealing surface (83, 87).

5. Connector housing (1) according to any of claims 1 to 4, wherein the ring seal (7) has, in a projection along the assembly direction (A), an overall rectangular shape (103), the two first portions (79) forming two parallel sides (105) and the two second portions (81) forming two parallel sides (107) which are perpendicular to the sides (105) formed by the first portions (79).

6. Connector housing (1) according to any of claims 1 to 5, wherein the second portions (81) of the ring seal (7) extend basically straight and are inclined at an angle (115) between 20" and 70° with respect to a plane (117) which is parallel to the assembly direction (A) and perpendicular to a plane (119) that is parallel to the mating direction (M) and to the assembly direction (A).

7. Connector housing (1) according to claim 6, wherein at least one of the second portions (81) of the ring seal (7) provides a passage length (121) for one of the housing members (3, 5) to pass during assembly, the passage length (121) being smaller than 3 times a width (123) of the ring seal (7) in the second portion (81), the width (123) being measured along a direction perpendicular to the basically straight second portion (81) and parallel to a plane (119) that is parallel to the mating direction (M) and to the assembly direction (A).

8. Connector housing (1) according to any of claims 1 to 7, wherein at least one of the housing members (3, 5) is provided with at least one projection (127) projecting along the assembly direction (A) and the other housing member is provided with at least one hole (125) for receiving the at least one projection (127) in an assembled state (S), wherein the at least one projection (127) and the at least one hole (125) are configured for preventing a movement of the housing members (3, 5) relative to each other parallel to the mating direction (M) in the assembled state (S).

9. Connector housing (1) according to any of claims 1 to 8, wherein the contact housing member (3) and the cable housing member (5) each have a circumferential wall (49, 73), wherein the at least one ring seal (7) is arranged in an undetachable manner on the circumferential wall (49, 73) of one of the housing members (3, 5) and abuts the circumferential wall (49, 73) of the other housing member (3, 5) in an assembled state (S) of the connector housing (1).

10. Connector housing (1) according to claim 9, wherein the at least one ring seal (7) is fixated to a circumferential wall (49, 73) of one of the housing members (3, 5) by at least one of the following means: an adhesive bond, being molded onto the circumferential wall (49,73), the corresponding housing member (3, 5) being manufactured by two-component molding with the ring seal (7).

11. Connector housing (1) according to claim 9 or 10, wherein the at least one ring seal (7) is arranged in an undetachable manner on an inner surface (75) of the circumferential wall (73) of the cable housing member (5).

12. Connector housing (1) according to any of claims 1 to 11, wherein at least one of the housing members (3, 5) comprises at least one groove (55) for receiving at least one of the first portions (79) of the at least one ring seal (7) and at least a part of the other housing member (3, 5) in an assembled state (S) of the connector housing (1), a longitudinal direction (60) of the groove (55) extending perpendicular to the assembly direction (A).

13. Connector housing (1) according to any of claims 1 to 12, wherein the housing members (3, 5) are provided with complementary guiding features (39, 63) configured for guiding the housing members (3, 5) relative to each other along the assembly direction (A).

14. Angled electric connector (17), the connector (17) comprising a connector housing (1) according to any one of claims 1 to 13, at least one electrical contact (9) in the contact housing member (3) and at least one electric cable (13) in the cable housing member (5), the at least one electric cable (13) being electrically connected to the at least one electric contact (9).

## Patentansprüche

1. Steckverbindergehäuse (1) für einen Winkelsteckverbinder (17), wobei das Steckverbindergehäuse (1) ein Kontaktgehäuseelement (3), das zum Aufnehmen wenigstens eines elektrischen Kontakts (9) dient und so ausgeführt ist, dass es mit einem Gegensteckverbinder (11) in einer Steckrichtung (M) zusammengesteckt wird, sowie ein Kabelgehäuseelement (5) umfasst, das so ausgeführt ist, dass es wenigstens ein elektrisches Kabel (13) in einer Kabelrichtung (C) aufnimmt, wobei die Kabelrichtung (C) in Bezug auf die Steckrichtung (M) geneigt ist, wobei das Kontaktgehäuseelement (3) und das Kabelgehäuseelement (5) so ausgeführt sind, dass sie in einer Montagerichtung (A) aneinander montiert werden, um das Steckverbindergehäuse (1) zu bilden, wobei das Steckverbindergehäuse (1) des Weiteren wenigstens eine Ringdichtung (7) umfasst, die zum Abdichten eines Spalts (19) zwischen dem Kontaktgehäuseelement (3) und dem Kabelgehäuseelement (5) ausgeführt ist, wobei sich die Ringdichtung (7) um einen Innenraum (15) des Steckverbindergehäuses (1) herum erstreckt und zwei erste Bereiche (79) sowie zwei zweite Bereiche (81) aufweist, wobei die zwei ersten Bereiche (79) in der Steckrichtung (M) und in der Montagerichtung (A) voneinander beabstandet sind und erste Dichtflächen (83) aufweisen, die sich senkrecht zu der Steckrichtung (M) erstrecken, wobei jeder der zwei zweiten Bereiche (81) die zwei ersten Bereiche (79) miteinander verbindet, wobei die zwei zweiten Bereiche (81) zweite Dichtflächen (87) aufweisen und in Bezug auf die Steckrichtung (M) sowie auf die Kabelrichtung (C) geneigt sind,
**dadurch gekennzeichnet, dass**
die zweiten Dichtflächen (87) der Ringdichtung (7) einander über den Innenraum (15) hinweg zugewandt angeordnet sind und Teil einer in Umfangsrichtung durchgehenden Dichtfläche (99) der Ringdichtung (7) bilden, wobei die in Umfangsrichtung durchgehende Dichtfläche (99) mit in Umfangsrichtung durchgehenden Dichtrippen (101) versehen ist,
wobei eine Kontur der Ringdichtung (7) in einer Projektion in einer Richtung senkrecht zu der Montagerichtung (A) und zu der Steckrichtung (M) einen ersten geraden Abschnitt (109), einen diagonalen Abschnitt (111), der den zweiten Bereichen (81) entspricht und der in Bezug auf den ersten geraden Abschnitt (109) geneigt ist, sowie einen zweiten geraden Abschnitt (113) aufweist, der parallel zu dem ersten geraden Abschnitt (109) ist, wobei die geraden Abschnitte (109, 113) die ersten Bereiche (79) mit den zweiten Bereichen (81) der Ringdichtung (7) verbinden.

2. Steckverbindergehäuse (1) nach Anspruch 1, wobei sich die ersten Dichtflächen (83) parallel zu der Montagerichtung (A) erstrecken.

3. Steckverbindergehäuse (1) nach Anspruch 1 oder 2, wobei die zweiten Bereiche (81) zweite Dichtflächen (87) aufweisen, die sich senkrecht zu den ersten Dichtflächen (83) der ersten Bereiche (79) erstrecken.

4. Steckverbindergehäuse (1) nach einem der Ansprüche1 bis 3, wobei wenigstens einer von dem ersten und zweiten Bereichen (79, 81) der Ringdichtung (7) einen rechteckigen Gesamtquerschnitt (93) hat und eine der flachen Seiten (95) des Querschnitts (93) Teil einer Dichtfläche (83, 87) ist.

5. Steckverbindergehäuse (1) nach einem der Ansprüche1 bis 4, wobei die Ringdichtung (7) in einer Projektion in der Montagerichtung (A) eine rechteckige Gesamtform (103) hat, die zwei ersten Bereiche (79) zwei parallele Seiten (105) bilden und die zwei zweiten Bereiche (81) zwei parallele Seiten (107) bilden, die senkrecht zu den durch die ersten Bereiche (79) gebildeten Seiten (105) sind.

6. Steckverbindergehäuse (1) nach einem der Ansprüche1 bis 5, wobei die zweiten Bereiche (81) der Ringdichtung (7) sich im Wesentlichen gerade erstrecken und in einem Winkel (115) zwischen 20° und 70° in Bezug auf eine Ebene (117) geneigt sind, die parallel zu der Montagerichtung (8) und senkrecht zu einer Ebene (119) ist, die parallel zu der Steckrichtung (M) und zu der Montagerichtung (A) ist.

7. Verbindergehäuse (1) nach Anspruch 6, wobei wenigstens einer der zweiten Bereiche (81) der Ringdichtung (7) eine Durchgangslänge (121) für eines der Gehäuseelemente (3, 5) zum Hindurchtreten während der Montage bereitstellt, wobei die Durchgangslänge (121) kleiner als das 3-Fache einer Breite (123) der Ringdichtung (7) in dem zweiten Bereich (81) ist, die Breite (123) dabei in einer Richtung senkrecht zu dem im Wesentlichen geraden zweiten Bereich (81) und parallel zu einer Ebene (119) gemessen wird, die parallel zu der Steckrichtung (M) sowie zu der Montagerichtung (A) ist.

8. Steckverbindergehäuse (1) nach einem der Ansprüche1 bis 7, wobei wenigstens eines der Gehäuseelemente (3, 5) mit wenigstens einem Vorsprung (127) versehen ist, der in der Montagerichtung (A) vorsteht, und das andere Gehäuseelement mit wenigstens einem Loch (125) zum Aufnehmen des wenigstens einen Vorsprungs (127) in einem montierten Zustand (S) versehen ist, wobei der wenigstens eine Vorsprung (127) sowie das wenigstens eine Loch (125) so ausgeführt sind, dass sie eine Bewegung der Gehäuseelemente (3, 5) relativ zueinander parallel zu der Steckrichtung (M) in dem montierten Zustand (S) verhindern.

9. Steckverbindergehäuse (1) nach einem der Ansprüche1 bis 8, wobei das Kontaktgehäuseelement (3) und das Kabelgehäuseelement (5) jeweils eine Umfangswand (49, 73) aufweisen, wobei die wenigstens eine Ringdichtung (7) nicht abnehmbar an der Umfangswand (49, 73) eines der Gehäuseelemente (3, 5) angeordnet ist und in einem montierten Zustand (S) des Verbindergehäuses (1) an der Umfangswand (49, 73) des anderen Gehäuseelementes (3, 5) anliegt.

10. Steckverbindergehäuse (1) nach Anspruch 9, wobei die wenigstens eine Ringdichtung (7) an einer Umfangswand (49, 73) eines der Gehäuseelemente (3, 5) mit wenigstens einem der folgenden Mittel fixiert ist: einer Klebeverbindung, Anformen an die Umfangswand (49, 73), Herstellen des entsprechenden Gehäuseelementes (3, 5) durch Zweikomponenten-Spritzgießen mit der Ringdichtung (7).

11. Steckverbindergehäuse (1) nach Anspruch 9 oder 10, wobei die wenigstens eine Ringdichtung (7) nicht abnehmbar an einer Innenfläche (75) der Umfangswand (73) des Kabelgehäuseelementes (5) angeordnet ist.

12. Steckverbindergehäuse (1) nach einem der Ansprüche1 bis 11, wobei wenigstens eines der Gehäuseelemente (3, 5) wenigstens eine Nut (55) zum Aufnehmen wenigstens eines der ersten Bereiche (79) der wenigstens einen Ringdichtung (7) sowie wenigstens eines Teils des anderen Gehäuseelementes (3, 5) in einem montierten Zustand (S) des Verbindergehäuses (1) umfasst und eine Längsrichtung (60) der Nut (55) senkrecht zu der Montagerichtung (A) verläuft.

13. Steckverbindergehäuse (1) nach einem der Ansprüche1 bis 12, wobei die Gehäuseelemente (3, 5) mit komplementären Führungsstrukturen (39, 63) versehen sind, die zum Führen der Gehäuseelemente (3, 5) relativ zueinander in der Montagerichtung (A) ausgeführt sind.

14. Elektrischer Winkelsteckverbinder (17), wobei der Steckverbinder (17) ein Steckverbindergehäuse (1) nach einem der Ansprüche 1 bis 13, wenigstens einen elektrischen Kontakt (9) in dem Kontaktgehäuseelement (3) sowie wenigstens ein elektrisches Kabel (13) in dem Kabelgehäuseelement (5) umfasst, wobei das wenigstens eine elektrische Kabel (13) elektrisch mit dem wenigstens einen elektrischen Kontakt (9) verbunden ist.

## Revendications

1. Boîtier de connecteur (1) pour un connecteur coudé (17), le boîtier de connecteur (1) comprenant un élément de boîtier de contact (3) destiné à recevoir au moins un contact électrique (9) et étant configuré pour être accouplé à un connecteur d'accouplement (11) le long d'une direction d'accouplement (M), et un élément de boîtier de câble (5) configuré pour recevoir au moins un câble électrique (13) le long d'une direction de câble (C), la direction de câble (C) étant inclinée par rapport à la direction d'accouplement (M), dans lequel l'élément de boîtier de contact (3) et l'élément de boîtier de câble (5) sont configurés pour être montés l'un sur l'autre le long d'une direction d'assemblage (A) afin de former le boîtier de connecteur (1), dans lequel le boîtier de connecteur (1) comprend en outre au moins un joint annulaire (7) configuré pour assurer l'étanchéité d'un jeu (19) entre l'élément de boîtier de contact (3) et l'élément de boîtier de câble (5), le joint annulaire (7) s'étendant autour d'un volume intérieur (15) du boîtier de connecteur (1) et présentant deux premières portions (79) et deux secondes portions (81), dans lequel les deux premières portions (79) sont espacées l'une de l'autre dans la direction d'accouplement (M) et dans la direction d'assemblage (A) et présentent des premières surfaces d'étanchéité (83) s'étendant perpendiculairement à la direction d'accouplement (M), dans lequel chacune des deux secondes portions (81) interconnecte les deux premières portions (79), dans lequel les deux secondes portions (81) présentent des secondes surfaces d'étanchéité (87) et sont inclinées par rapport à la direction d'accouplement (M) et à la direction de câble (C),
**caractérisé en ce que**
les secondes surfaces d'étanchéité (87) du joint annulaire (7) sont disposées en vis-à-vis l'une de l'autre de part et d'autre du volume intérieur (15) et forment une partie d'une surface d'étanchéité (99) circonférentiellement continue du joint annulaire (7), dans lequel la surface d'étanchéité (99) circonférentiellement continue est pourvue de nervures d'étanchéité (101) circonférentiellement continues,
dans lequel un contour du joint annulaire (7) présente, dans une projection le long d'une direction perpendiculaire à la direction d'assemblage (A) et à la direction d'accouplement (M), une première section rectiligne (109), une section diagonale (111) qui correspond aux secondes portions (81) et qui est inclinée par rapport à la première section rectiligne (109), et une seconde section rectiligne (113) qui est parallèle à la première section rectiligne (109), les sections rectilignes (109, 113) connectant les premières portions (79) aux secondes portions (81) du joint annulaire (7).

2. Boîtier de connecteur (1) selon la revendication 1, dans lequel les premières surfaces d'étanchéité (83) s'étendent parallèlement à la direction d'assemblage (A).

3. Boîtier de connecteur (1) selon la revendication 1 ou 2, dans lequel les secondes portions (81) présentent des secondes surfaces d'étanchéité (87) qui s'étendent perpendiculairement aux premières surfaces d'étanchéité (83) des premières portions (79).

4. Boîtier de connecteur (1) selon l'une quelconque des revendications 1 à 3, dans lequel au moins l'une des premières et secondes portions (79, 81) du joint annulaire (7) présente une section transversale (93) globalement rectangulaire, l'un des côtés plats (95) de la section transversale (93) faisant partie d'une surface d'étanchéité (83, 87).

5. Boîtier de connecteur (1) selon l'une quelconque des revendications 1 à 4, dans lequel le joint annulaire (7) présente, dans une projection le long de la direction d'assemblage (A), une forme globalement rectangulaire (103), les deux premières portions (79) formant deux côtés parallèles (105) et les deux secondes portions (81) formant deux côtés parallèles (107) qui sont perpendiculaires aux côtés (105) formés par les premières portions (79).

6. Boîtier de connecteur (1) selon l'une quelconque des revendications 1 à 5, dans lequel les secondes portions (81) du joint annulaire (7) s'étendent de manière fondamentalement rectiligne et sont inclinées selon un angle (115) compris entre 20° et 70° par rapport à un plan (117) qui est parallèle à la direction d'assemblage (A) et perpendiculaire à un plan (119) qui est parallèle à la direction d'accouplement (M) et à la direction d'assemblage (A).

7. Boîtier de connecteur (1) selon la revendication 6, dans lequel au moins l'une des secondes portions (81) du joint annulaire (7) définit une longueur de passage (121) pour que l'un des éléments de boîtier (3, 5) passe lors de l'assemblage, la longueur de passage (121) étant inférieure à 3 fois une largeur (123) du joint annulaire (7) dans la seconde portion (81), la largeur (123) étant mesurée le long d'une direction perpendiculaire à la seconde portion (81) fondamentalement rectiligne et parallèle à un plan (119) qui est parallèle à la direction d'accouplement (M) et à la direction d'assemblage (A).

8. Boîtier de connecteur (1) selon l'une quelconque des revendications 1 à 7, dans lequel au moins l'un des éléments de boîtier (3, 5) est pourvu d'au moins une saillie (127) faisant saillie le long de la direction d'assemblage (A) et l'autre élément de boîtier est pourvu d'au moins un trou (125) destiné à recevoir ladite au moins une saillie (127) dans un état assemblé (S), dans lequel ladite au moins une saillie (127) et ledit au moins un trou (125) sont configurés pour empêcher un déplacement des éléments de boîtier (3, 5) l'un par rapport à l'autre parallèlement à la direction d'accouplement (M) dans l'état assemblé (S).

9. Boîtier de connecteur (1) selon l'une quelconque des revendications 1 à 8, dans lequel l'élément de boîtier de contact (3) et l'élément de boîtier de câble (5) présentent chacun une paroi circonférentielle (49, 73), dans lequel ledit au moins un joint annulaire (7) est disposé d'une manière inséparable sur la paroi circonférentielle (49, 73) de l'un des éléments de boîtier (3, 5) et vient en appui contre la paroi circonférentielle (49, 73) de l'autre élément de boîtier (3, 5) dans un état assemblé (S) du boîtier de connecteur (1).

10. Boîtier de connecteur (1) selon la revendication 9, dans lequel ledit au moins un joint annulaire (7) est fixé à une paroi circonférentielle (49, 73) de l'un des éléments de boîtier (3, 5) par au moins l'un des moyens suivants : un collage, en étant moulé sur la paroi circonférentielle (49, 73), l'élément de boîtier (3, 5) correspondant étant fabriqué par moulage bi-composant avec le joint annulaire (7).

11. Boîtier de connecteur (1) selon la revendication 9 ou 10, dans lequel ledit au moins un joint annulaire (7) est disposé d'une manière inséparable sur une surface intérieure (75) de la paroi circonférentielle (73) de l'élément de boîtier de câble (5).

12. Boîtier de connecteur (1) selon l'une quelconque des revendications 1 à 11, dans lequel au moins l'un des éléments de boîtier (3, 5) comprend au moins une rainure (55) destinée à recevoir au moins l'une des premières portions (79) dudit au moins un joint annulaire (7) ainsi qu'au moins une partie de l'autre élément de boîtier (3, 5) dans un état assemblé (S) du boîtier de connecteur (1), une direction longitudinale (60) de la rainure (55) s'étendant perpendiculairement à la direction d'assemblage (A).

13. Boîtier de connecteur (1) selon l'une quelconque des revendications 1 à 12, dans lequel les éléments de boîtier (3, 5) sont pourvus de caractéristiques de guidage complémentaires (39, 63) configurées pour guider les éléments de boîtier (3, 5) l'un par rapport à l'autre le long de la direction d'assemblage (A).

14. Connecteur électrique coudé (17), le connecteur (17) comprenant un boîtier de connecteur (1) selon l'une quelconque des revendications 1 à 13, au moins un contact électrique (9) dans l'élément de boîtier de contact (3) et au moins un câble électrique (13) dans l'élément de boîtier de câble (5), ledit au moins un câble électrique (13) étant électriquement connecté audit au moins un contact électrique (9).
